Europäisches Patentamt

European Patent Office

Office européen des brevets

(19)

(11) Publication number: **0 009 985**

A1

## (12) EUROPEAN PATENT APPLICATION

(21) Application number: **79302127.0**

(22) Date of filing: **05.10.79**

(51) Int. Cl.³: **F 16 K 11/14**
**F 16 K 19/00**

(30) Priority: **06.10.78 GB 3959378**

(43) Date of publication of application:
**16.04.80 Bulletin 80/8**

(84) Designated Contracting States:
**DE FR GB IT**

(71) Applicant: **DELTA MATERIALS RESEARCH LIMITED**
**P.O. Box 22 Hadleigh Road**
**Ipswich Suffolk IP2 0EG(GB)**

(72) Inventor: **Hart, William Barrie**
**1 Almondhayes**
**Ipswich, Suffolk(GB)**

(74) Representative: **Batchellor, John Robert et al,**
**Batchellor, Kirk & Eyles 2 Pear Tree Court Farringdon**
**Road**
**London EC1R 0DS(GB)**

(54) Thermostatic mixer valve.

(57) A thermostatic mixer valve comprises a valve body (12); two inlet ducts (13,14) for liquids at different temperatures and an outlet duct (55) for mixed liquid; valves (15,16) controlling entry of liquid through each of the inlet ducts (13,14); a rotatable and linearly displaceable cam member (23) engaged by, and controlling, both valves (15,16); manually operated means (36) for rotating the cam member (23) to control the volume of flow delivered by the outlet duct (55); a shape memory effect element (45) subject to the temperature of liquid within the body (12) and coupled to the cam member (23) to vary the linear position of the cam member (23) relative to the valves (15,16) and hence to vary differentially the rates of flow of liquid passing the valves (15,16); and further manually adjustable means (34) for varying the linear position of the cam member (23) in order to select the temperature at which the liquid within body (12) is maintained.

FIG.1.

# THERMOSTATIC MIXER VALVE

This invention relates to a thermostatic mixer valve, in which liquids are supplied to the valve at different temperatures, and the mixed liquid outlet is maintained thermostatically at a desired temperature.

A thermostatic mixer valve of the present invention makes use of an element of a material having an elastic modulus which varies significantly with temperature in a reversible manner (hereinafter called "a variable elasticity material"). A number of variable elasticity materials are known and have been described in the literature: in the present invention, we prefer to employ an alloy which exhibits the above property, and particularly a copper-zinc-aluminium alloy.

In West German published patent application No. 27 20 886 there is illustrated but not described a thermostatic mixer valve having a valve body, two inlet ducts in the valve body for connection to liquids supplied at different temperatures, an outlet duct from the body for mixed liquid, an outlet duct from the body for mixed liquid, valve means for varying the ratio of the flows through the inlet ducts and therefore the temperature of the mixed liquid, a temperature sensitive device comprising an element of variable elasticity material (called in said application "a shape memory effect (SME) material") subject to the temperature of the liquid within the body and controlling the valve to maintain the temperature of the mixed liquid substantially at a desired value, and means for controlling the volume of mixed liquid leaving the body through the outlet duct. The present invention provides an improved form of thermostatic mixer valve which is adapted for commercial production. That valve is intended primarily for shower installations, but may be employed in other applications where the temperature of a mixture of two liquids is to be maintained substantially constant.

The present invention provides a thermostatic mixer valve as described above and is characterised in that the valve means comprise first and second valve members within the valve body to control the flows from the inlet ducts and a rotatable and linearly displaceable cam member engaged by both the valve members and coupled to the temperature sensitive device to adjust the ratio of flows passing the valve members, the means for controlling the volume of liquid through the outlet duct also acting on the cam member to vary in the same direction the flows passing the valve members.

Preferably, the means for controlling the volume of liquid are coupled to cause rotation of the cam member, while the temperature sensitive device is effective to alter the displacement of the cam member relative to the valve members. The element of variable elasticity material may be stressed by a resilient biasing device.

The invention will be more readily understood by way of example from the following description of a thermostatic

3

mixer valve in accordance therewith, reference being made to the accompanying drawings, in which ·

Figure 1 is an axial section through the valve, and

Figure 2 is a plan view of the cam member of Figure 1.

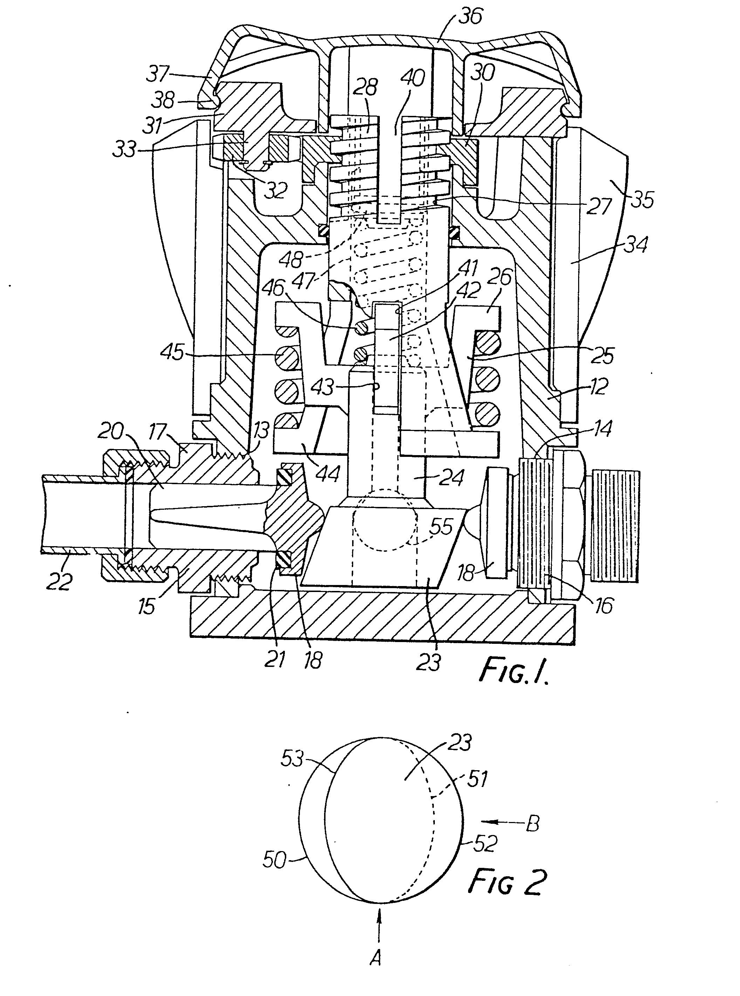

The valve of Figure 1 has a valve body 12, in which there are two diametrically opposite inlet openings 13 and 14, in which are secured individual valves 15 and 16 respectively. As shown, each valve consists of a sleeve 17 in which is slidably located a mushroom valve member 18, the head of which is located within the valve body 12. The stem of the valve body 18 has a number of axially extending slots 20, while the head carries a seal ring 21 adapted to seat against the end of the sleeve 17 when the valve is closed. The two valves 15 and 16 are connected to pipes for the supply of, respectively, hot and cold water, the hot pipe being indicated at 22.

The positions of the valve members 18 of the valves 15 and 16 are controlled jointly by a cam 23, which will be described in greater detail hereinafter, and which is carried by a stem 24 extending axially of the valve body 12. That stem is secured to, or is integral with, a number of legs 25, each of which is outwardly cranked at 26.

The valve body 12 has a central, threaded, opening 27, which is aligned with the stem 24, and which receives a threaded shaft 28. Also meshing with the shaft 28 is an internally threaded ring 30 rotatably mounted on the valve body 12 and located axially by a further, stationary, ring 31

4

secured to the end of the body 12. Ring 30 has external gear teeth, meshing with a pinion 32 carried on a pin 33 which is integral with the stationary ring 31. Pinion 32 also meshes with internal teeth on a temperature-selecting, manually adjustable, external sleeve 34 having outwardly projecting gripping fins 35. An end cap 36, which can be manually rotated to adjust the volume of mixed liquid discharged from the valve, has fingers 37 with inwardly directed ribs 38 received in a peripheral slot in the stationary ring 31. The cap 36 has integral keys 40 which are received in slots in the exterior of the shaft 28, so that rotation of the end cap 36 causes the shaft 28 to turn in the threaded opening 27. Shaft 28 also has at its lower extremity axially directed slots 41 in which are received keys 42. Keys 42 are also received in slots 43 in the end of the stem 24; the keys 42 thus ensure that the cam 23 rotates with shaft 28, but allows relative axial movement between the two.

Shaft 28 carries downwardly directed legs 44 which are also cranked outwardly at their ends and which pass between the legs 25. An element 45 in the form of a helical spring and made of a variable elasticity alloy is disposed in compression between the cranked ends of legs 25 of the stem 24 and the cranked ends of the legs 44 of the shaft 28. The variable elasticity alloy is one having a reversible martensitic transformation when its temperature is varied through a transition temperature range, i.e. it displays the shape memory effect. While other suitable alloys are possible, it is preferred to employ a copper-zinc-aluminium alloy having the following approximate proportions by weight

| Copper | 70% |
| Zinc | 26% |
| Aluminium | 4%. |

The exact proportions are varied slightly according to the temperature range required.

A steel helical compression spring 46 abuts at one end against the stem 24, enters a bore 47 in the shaft 28, and abuts at the other end against a plug 48 threaded in the bore. Spring 46 thus stresses the variable elasticity element 45, putting that element into compression, the degree of compression being adjustable for calibration purposes by adjustment of the position of plug 48 in bore 47.

The shape of the cam 23 is best illustrated in plan in Figure 2. At the lower end of the cam, the periphery in plan is a semi-circle 50 at one side of the central plane and a semi-ellipse 51 at the other side of that plane, the major axis of the ellipse being the same as the diameter of the circle. Similarly, at the other upper extremity of the cam, the profile at the right hand side of the central plane is a semi-circle 52 and a semi-ellipse 53 at the left hand side. At any axial position between the two extremities, the section of the cam at right angles to the axis of rotation consists of two, generally dissimilar semi-ellipses having the same major axes and minor axes which vary differentially progressively down the axis of the cam. The cam thus has the

6

rhombic shape in side elevation shown in Figure 1, when viewed in the direction of the arrow A of Figure 2, and a rectangular shape in side elevation when viewed in the direction of the arrow B.

If the cam 23 is moved axially, i.e. vertically, from the position shown in Figure 1, and if the valve members 18 of valves 15 and 16 are biased towards the cam by the pressure of water in the supply pipes, valve member 18 of valve 15 is caused progressively to move towards the closed position, while member 18 of valve 16 is allowed to open correspondingly from the closed position. Rotation of the stem 24, and hence the cam 23, from the position shown in Figure 1, causes valve 16 to remain closed, because its member 18 is engaged against the semi-circular profile 52, and valve member 18 of valve 15 to move towards the closed position. At axial positions of the cam 23 between the extreme axial positions, both valves are open to different degrees and rotation of the cam alters the degree of opening of both valves, without changing the ratio of flow rates from the valves.

The valve body 12 has an outlet 55 located behind the stem 24 for discharge of mixed water. Hot and cold water thus enters the valve body 12 through the valves 15, 16, mixing takes place within the body and the mixed water is discharged through the outlet 55. The volume of mixed water delivered is controlled by the end cap 36, both valves being shut when stem 24 is rotated through 90° from the position

shown in Figure 1, i.e. when valve members 18 engage the ends of the major axis of the ellipses 51 and 53 (Figure 2). Rotation from that off position to the fully on position of Figure 1 causes progressive increase of the rate of discharge.

The temperature at which the outlet mixed water is thermostatically maintained is adjusted by means of the finned sleeve 34. The position shown in Figure 1 is that for maximum temperature discharge, whereas rotation of sleeve 34 from that position results in lowering of the temperature. Rotation of sleeve 34 causes, through the pinion 32, the rotation of ring 30 and, as shaft 28 is held by end cap 36 and keys 40 against rotation, the axial displacement of shaft 28. Because of the action of springs 45 and 46, the axial movement of shaft 28 is accompanied by a similar movement of stem 24, to bring a different profile of cam 23 into engagement with the valve members 18 and hence a different ratio of flow rates through the valves 15 and 16.

At any setting of the sleeve 34, the axial position of stem 24 relative to the shaft 28 is determined by the spring moduli of the springs 45 and 46, the axial position of cam 23 being determined by the position of equilibrium of the two opposed springs. The variable elasticity spring 45 is subject to the temperature of the mixed water and reacts to any change in the temperature of the mixed water by altering its coefficient of elasticity. Thus, if the temperature of the mixed water increases, due perhaps to a rise in the temperature of the hot water supply, or a fall in the pressure of the cold water supply, the spring 45 becomes stiffer with the result that the strain caused by stressing by spring 46 decreases, spring 45 increases in length, stem 24 is raised, and the opening of valve 15 is decreased and that of valve 16 increased until the temperature of the mixed water has returned to the required value. Similarly, a fall in the temperature of the mixed water results in stem 24 moving downwardly and causing valve 15 to open further and valve 16 to decrease its opening, again to maintain a datum temperature. Rotation of sleeve 34 has the effect of shifting the assembly of shaft 28, stem 24 and springs 45 and 46, with the consequence that the temperature at which the outlet water is maintained is appropriately altered.

The temperature of the mixed water can also be adjusted by altering the position of plug 48 in bore 47 and hence the compression of spring 46, which in turn alters the axial position of cam 23 for any given disposition of finned sleeve 34. In practice, adjustment of plug 48 is used for factory calibration of the mixer valve, to ensure that the range of temperature of mixed water delivered by the valve is suited to the purpose of the valve.

9

CLAIMS

1. A thermostatic mixer valve comprising a valve body; two inlet ducts in the valve body for connection to liquids supplied at different temperatures; an outlet duct from the body for mixed liquid; valve means for varying the ratio of the flows through the inlet ducts; a temperature sensitive device comprising an element of variable elasticity material subject to the temperature of the liquid within the body and controlling the valve to maintain the temperature of the mixed liquid substantially at a desired value; and means for controlling the volume of mixed liquid leaving the body through the outlet duct:

characterised in that the valve means comprise first and second valve members (18) within the valve body (12) to control the flows from the inlet ducts and a rotatable and linearly displaceable cam member (23) engaged by both the valve members (18) and coupled to the temperature sensitive device (45) to adjust the ratio of flows passing the valve members, the means (36) for controlling the volume of liquid through the outlet duct also acting on the cam member (23) to vary in the same direction the flows passing the valve members (18).

2. A thermostatic mixer valve according to claim 1, characterised in that the means (36) for controlling the volume of liquid are coupled to cause rotation of the cam member (23), while the temperature sensitive device (45) is effective to alter the linear displacement of the cam member (23) relative to the valve members (18).

3.    A thermostatic mixer valve according to claim 1 or claim 2, characterised in that there are means (30, 32, 34) for varying the temperature to which the temperature of the mixed liquid is controlled.

4.    A thermostatic mixer valve according to claim 3, characterised in that the temperature varying means (30, 32, 34) operates to displace linearly the cam member (36) and the temperature sensitive device (45).

5.    A thermostatic mixer valve according to claim 2, characterised in that the temperature sensitive device is a helical spring (45) of variable elasticity material stressed by spring biasing means (46).

6.    A thermostatic mixer valve according to claim 5, characterised in that the helical spring (45) is made of a copper-zinc-aluminium exhibiting a temperature dependent martensitic transformation.

7.    A thermostatic mixer valve according to claim 5 or claim 6, characterised in that the helical spring (45) of variable elasticity material is arranged between the cam member (23) and a shaft (28) and is placed in compression by the biasing means (46) also acting effectively between the cam member (23) and shaft (28), and the shaft is displaceable axially by manually adjustable temperature varying means (30, 32, 34).

8.    A thermostatic mixer valve according to any one of the preceding claims, characterised in that the cam member (23) is in section at right angles to its axis of rotation in the form of two semi-ellipses, the major axes of which are the equal and coincident, and the minor axes of which are different and vary differentially along the axis of rotation of the cam member, and the valve members (18) engage the cam member diametrically opposite one another, so that axial movement of the cam members (23) varies differentially the valve members (18), while rotation of the cam member (23) varies the valve members (18) in the same direction.

1/1

0009985

Fig. I.

Fig 2

European Patent
Office

**EUROPEAN SEARCH REPORT**

0009985
Application number

EP 79 302 127.0

| DOCUMENTS CONSIDERED TO·BE RELEVANT | | | CLASSIFICATION OF THE APPLICATION (Int. Cl.3) |
|---|---|---|---|
| Category | Citation of document with indication, where appropriate, of relevant passages | Relevant to claim | |
| | DE - U - 7 401 193 (JOH. VAILLANT KG.) <br> * fig. 1, 2 * <br><br> -- | 1-4,7 | F 16 K 11/14 <br> F 16 K 19/00 |
| | FR - A - 1 508 226 (M.R. CHENILLAT) <br> * fig. 1 to 5 * <br><br> -- | 1-4,7 | |
| | FR - A1 - 2 305 610 (DELTA MATERIALS RESEARCH LTD.) <br> * page 15, lines 10 to 12 * <br><br> -- | 6 | **TECHNICAL FIELDS SEARCHED (Int.Cl.3)** |
| | DE - B2 - 2 261 710 (KRUPP) <br> * column 1, lines 42 to 47, <br> column 3, lines 23 to 29 * <br><br> -- | 6 | |
| | US - A - 2 820 478 (R.A. HENDRY) <br> * fig. 2, 6, 7 * <br><br> -- | 8 | F 03 G 7/00 <br> F 16 K 11/00 <br> F 16 K 19/00 |
| D | DE - A1 - 2 720 886 (DELTA MATERIALS RESEARCH LTD.) <br> * page 6, lines 22 to 25, page 12, <br> lines 8 to 14 * <br><br> ---- | 1,5,6 | G 05 D 11/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |
| Place of search <br> Berlin | Date of completion of the search <br> 04-12-1979 | Examiner <br> SCHLABBACH . | |